# EUROPÄISCHE PATENTSCHRIFT

(11) **EP 1 175 281 B1**
(45) Veröffentlichungstag und Bekanntmachung des Hinweises auf die Patenterteilung: **16.11.2005**
(21) Anmeldenummer: 00991540.6
(22) Anmeldetag: 21.12.2000
(51) Int. Cl.: B24B 23/02, B25F 5/02, H01R 39/38

(54) **WINKELSCHLEIFER MIT ELEKTROANTRIEB**
ANGLE GRINDER WITH ELECTRIC DRIVE
MEULEUSE D'ANGLE A COMMANDE ELECTRIQUE

(30) Priorität: 10.01.2000 DE 20000223 U
(43) Veröffentlichungstag der Anmeldung: 30.01.2002
(73) Patentinhaber: ROBERT BOSCH GMBH, 70442 Stuttgart (DE)
(72) Erfinder: BERGER, Guenther, 73274 Notzingen (DE); WALZ, Roland, 70567 Stuttgart (DE); STIERLE, Peter, 71111 Waldenbuch (DE); DAMMERTZ, Ralph, 70567 Stuttgart (DE); SULEA, Maria-Margareta, 70771 Leinfelden-Echterdingen (DE); HEESS, Stefan, 70794 Filderstadt (DE)
(86) Internationale Anmeldenummer: PCT/DE2000/004569
(87) Internationale Veröffentlichungsnummer: WO 2001/051251

(56) Entgegenhaltungen:
- DE-A- 3 324 546
- DE-A- 3 731 079
- DE-A- 19 805 577
- DE-U- 9 216 172
- DE-U- 29 715 570
- US-A- 5 793 141

## Beschreibung

Die vorliegende Erfindung geht aus von einer Handwerkzeugmaschine nach dem Oberbegriff des Anspruchs 1. Eine solche Handwerkzeugmaschine ist aus DE 198 05 577A bekannt.

Bei Winkelschleifern in Topfbauweise sind deren Elektromotoren über zwei je in einer Bürstenplatte gelagerte Kohlebürsten mit einer Spannungsquelle kontaktierbar. Die am Gehäuse befestigbaren Bürstenplatten bestehen aus Kunststoff und tragen je einen Metallkäfig, der der Halterung und verschiebbaren Führung der Kohlebürste dient, die zur Spannungsquelle hin mit einer Litze mit Kontaktklemmen verbindbar ist.

Diese Art der Anordnung ist verhältnismäßig umständlich, erfordert einen hohen Montageaufwand und teure, maßhaltige Gehäuseteile.

Diese Nachteile werden durch eine Handwerkzeugmaschine mit den Merkmalen des Anspruchs 1 beseitigt.

Dadurch, daß die Lagerbrücke einen integrierten Schalter trägt, der mit Mitteln versehen ist, die den Schalter beim Ausschalten der Schalttaste zwangsläufig öffnen, ist ein ungewolltes Schließen des Schalters und entsprechende negative Folgen wie z.B. Verzundern des Kollektors, ausgeschlossen.

### Zeichnung

Nachstehend ist die Erfindung anhand eines Ausführungsbeispiels mit zugehöriger Zeichnung näher erläutert.

Es zeigen
Figur 1 eine Explosionsdarstellung des erfindungsgemäßen Winkelschleifers

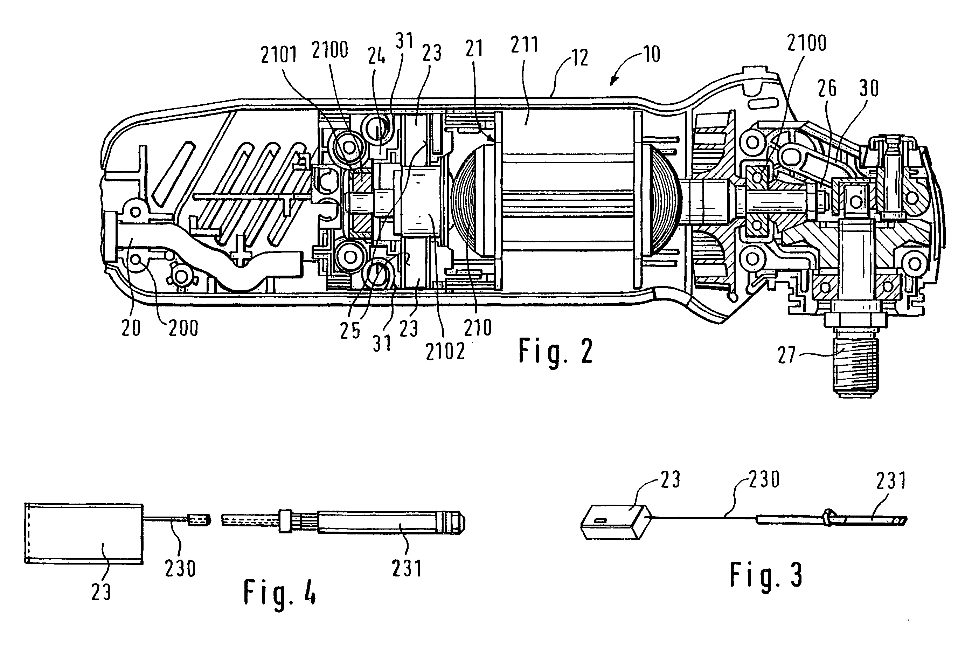

Figur 2 einen Längsschnit des Winkelschleifers
Figur 3 eine räumliche Darstellung der Kohlebürste

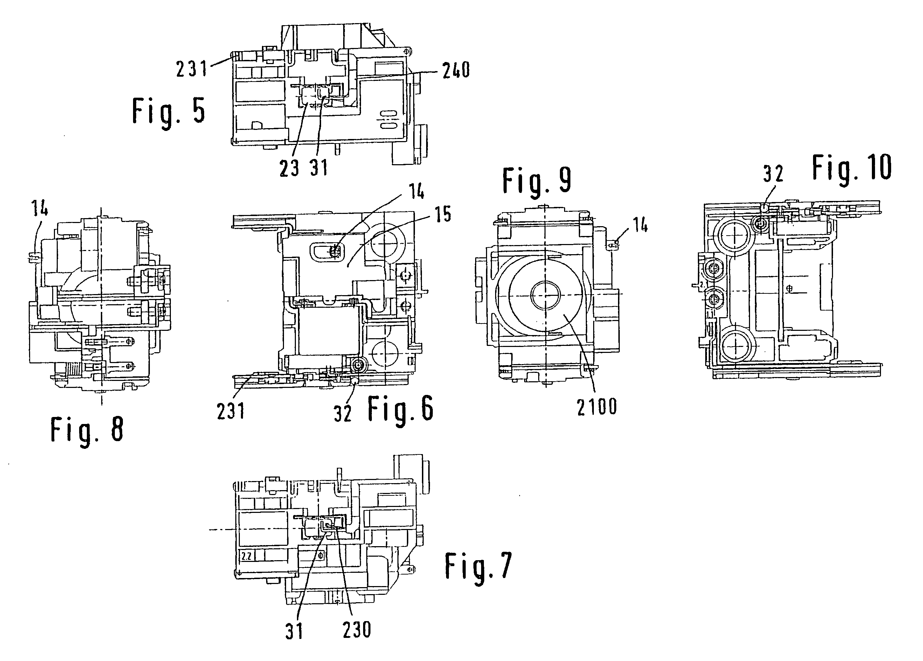

Figur 4 eine Seitenansicht der Kohlebürste
Figur 5 eine Ansicht der Lagerbrücke von oben
Figur 6 eine Seitenansicht der Lagerbrücke von links
Figur 7 eine Unteransicht der Lagerbrücke
Figur 8 eine Hinteransicht der Lagerbrücke
Figur 9 eine Vorderansicht der Lagerbrücke
Figur 10 eine Seitenansicht der Lagerbrücke von rechts
Figur 11 eine Seitenansicht einer Variante der Lagerbrücke ähnlich Figur 6 von links mit Schaltwippe und
Figur 12 einen vergrößerten Auschnitt im Bereich der Schaltwippe.

### Ausführungsbeispiel

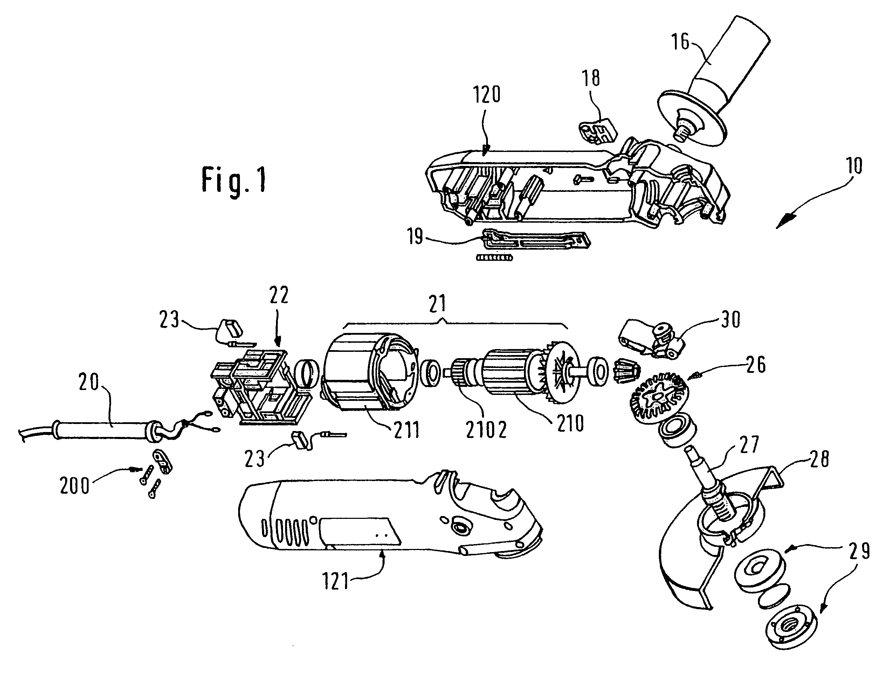

Figur 1 zeigt eine Explosionsdarstellung einer als Winkelschleifer ausgestalteten Handwerkzeugmaschine. Deren Gehäuse 12 besteht aus einer ersten und zweiten Gehäuseschale 120, 121. Die erste Gehäuseschale 120 trägt seitlich eine längsverschiebbare Schalttaste 18 zum Betätigen eines Schalters 15. Außerdem trägt die erste Gehäuseschale 120 einen Zusatzhandgriff 16 zum zusätzlichen Halten und Führen des Winkelschleifers mit der zweiten Hand.

Die Schalttaste 18 ist über einen Schaltarm 19 und eine Schaltnase 14 mit einem Schalter 15 gekoppelt. Dieser sitzt in einer im hinteren Bereich des Gehäuses 12 angeordneten Lagerbrücke 24, die als Bürstenplatte dient und die zwei Kohlbürsten 23 trägt.

Hinten aus dem Gehäuse 12 tritt ein E-Kabel 20 zur Stromversorgung des Elektro-Motors 21 aus, das über Klemmittel 200 an der Gehäuseschale 120 festgehalten wird. Der Motor 21 besteht aus einem Stator 211 und einem Rotor 210, der an beiden Wellenenden in Rotorlagern 2100 im Gehäuse 12 gelagert ist. Das hintere Ende des Rotors 210 mit dem Rotorlager 2100 ist in einer Gummibuchse 2101 gelagert, die ihrerseits in der Lagerbrücke 24 drehfest sitzt. Die Lagerbrücke 24 trägt den Schalter 15 sowie die Kohlebürsten 23, deren Litzen 230 an ihren freien Enden je eine angekrimpten Stecker 231 tragen. Die Litzen 230 sind in nutartigen Vertiefungen 240 der Laberbrücke 24 klemmbar sind. Als Klemmittel dienen zylindrische Gummistopfen 32, deren Durchmesser geringfügig größer als die lichte Weite der Vertiefungen 240 ist.

Auf einander diametral gegenüberliegenden Seiten weist die Lagerbrücke 24 je einen Schacht 25 zur Führung einer Kohlebürste 23 auf. Die Kohlebürsten werden darin mittels je einer Feder 31 zum Kollektor 24 hin gedrückt.

Die Schächte 25 sind auf je drei Seiten aus Kunststoff gefertigt, während die vierte, in Drehrichtung des Kollektors 2102 liegende Seite aus Messingblech besteht. Auf diese Seite prallt auch das Bürstenfeuer beim Betrieb des Winkelschleifers 10. Dies schützt den aus Kunststoff bestehenden Grundkörper. Die Lagerbrücke 24 trägt außerdem außen in Verlängerungen der Vertiefungen 240 verrastbare Öffnungen zum Einlegen der am Ende der Litzen 230 angekrimpten Stecker 231. Dadurch ist die Lagerbrücke 24 steckkontaktartig an den Stator 211 ansetzbar und somit auch eine sichere elektrische Kontaktierung zwischen den Kohlebürsten 23 und dem Stator 211 möglich.

Darüberhinaus trägt die Lagerbrücke 24 zwischen der Schaltnase 14 und der Lagerbrücke 24 eine Schaltwippe 33, die federelastisch nach kürzestem Schaltbetätigungsweg der Schalttaste 18 bzw. des Schaltarms 19 bzw. der Schaltnase 14 als Servo-Einrichtung den Schaltvorgang in der angedeuteten Schaltrichtung besonders schnell und wirksam ausführt und abschließt.

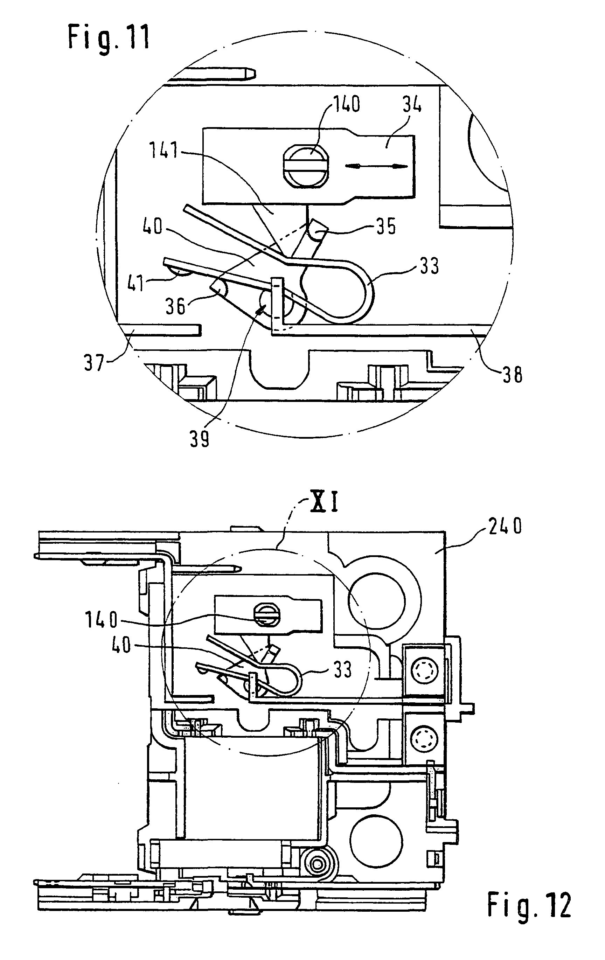

Dies ist in den Figuren 11 und 12 deutlich gezeigt, in denen eine Variante einer Lagerbrücke 240 von links gezeigt ist, die im Bereich der Schaltnase 140, die in Pfeilrichtung 34 betätigbar ist. Die Schaltnase 140 gibt über den Schaltnocken 141 nur einen "Steuerimplus" an die Schaltscheibe 40 ab, die sich um den Drehpunkt 39 nach links oder rechts dreht.

Durch die als u-förmiges Federelement ausgestaltete Schaltwippe 33 wird der Ein- bzw. Aussachaltvorgang unterstützt, indem diese vorgespannt zwischen axial vorstehenden Nocken 36, 37 der Schaltscheibe 40 sitzt und diese je nach Betätigungsrichtung antreibt, bzw. springen läßt, so daß der Kontaktpunkt 41 entweder zur Anlage an die Leiterbahn 37 zum Poschuh hin gelangt oder von diesem weggerissen wird.

Im vorderen Bereich des Gehäuses 12 schließt sich an den Motor 21 ein Getriebe 26 an, das in einer Arbeitsspindel 27 endet, die über zwei nicht näher bezeichnete Kegelräder, ein kleines Kegelrad und ein Tellerrad eines Winkelgetriebes, drehend antreibbar ist. Das Ende der Arbeitsspindel 29 ist von einer Schutzhaube 28 umgeben und zur Aufnahme zweier Spannflansche 29 vorgesehen, zwischen die eine Schleifscheibe spannbar ist.

Außerdem trägt der vordere Bereich des Gehäuses 12 zwischen den Gehäuseschalen 120, 121 ein Einlegeteil 30 zur Verstärkung des Kunststoffs und zur Aufnahme eines nicht näher bezeichneten Spindelstops zum Arretieren des Tellerades.

## Patentansprüche

1. Handwerkzeugmaschine (10), insbesondere Winkelschleifer, mit einem Gehäuse (12), das einen elektrischen Motor (21) und ein Getriebe (26) aufnimmt, wobei der Motor (21) einen in Rotorlagern (2100) geführten Rotor (210) aufweist, der an einem Ende einen Kollektor (2102) trägt, der über in Bürstenplatten gelagerte Kohlebürsten (23) mit einer Spannungsquelle kontaktierbar ist, **dadurch gekennzeichnet daß** wobei das Gehäuse (12) aus zwei längsgeteilten Gehäuseschalen (120, 121) besteht und wobei die Bürstenplatten Teil einer Lagerbrücke (24) sind, die sowohl das Rotorlager (2100) als auch die Kohlebürsten (23) trägt, **dadurch gekennzeichnet daß** die Lagerbrücke (24) im Führungsbereich der Kohlebürsten (23) aus Kunststoff besteht und dass die Lagerbrücke (24) einen integrierten Schalter (15) trägt, der mit Mitteln versehen ist, die den Schalter (15) beim Ausschalten der Schalttaste (18) zwangsläufig öffnen.

2. Handwerkzeugmaschine nach Anspruch 1, **dadurch gekennzeichnet, dass** der Führungsbereich der Kohlebürsten (23) als Schacht (25) mit viereckigem Querschnitt gestaltet ist.

3. Handwerkzeugmaschine nach Anspruch 2, **dadurch gekennzeichnet, dass** eine der vier Seiten des Schachts (25) aus Metall, insbesondere Messingblech, besteht.

4. Handwerkzeugmaschine nach Anspruch 3, **dadurch gekennzeichnet, dass** die Seite des Schachts (25) aus Messingblech besteht, zu der hin die Kohlebürste (23) bei bestimmungsgemäßem Betrieb des Motors (21) angedrückt wird.

5. Handwerkzeugmaschine nach Anspruch 1, **dadurch gekennzeichnet, dass** die Litze (230) der Kohlebürste (23) in Vertiefungen (240) der Lagerbrücke (24) festhaltbar, insbesondere mit einem Gummistopfen (32), klemmbar, ist.

6. Handwerkzeugmaschine nach Anspruch 5, **dadurch gekennzeichnet, dass** die Litze (230) an ihrem freien Ende einen, insbesondere angekrimpten, Stecker (231) trägt, der an der Lagerbrücke (24) lösbar verrastbar ist.

7. Handwerkzeugmaschine nach Anspruch 1, **dadurch gekennzeichnet, dass** die Lagerbrücke (24) das Rotorlager (2100) in einer Gummibuchse (2101) gefasst trägt.

## Claims

1. Powered hand tool (10), in particular an angle grinder, comprising a housing (12) which accommodates an electric motor (21) and a gear unit (26), the motor (21) having a rotor (210) which is guided in rotor bearings (2100) and which, at one end, carries a collector (2102) which can make contact with a voltage source via carbon brushes (23) mounted in brush plates, the housing (12) consisting of two longitudinally split housing halves (120, 121), and the brush plates being part of a bearing bridge (24) which carries both the rotor bearing (2100) and the carbon brushes (23), **characterized in that** the bearing bridge (24) is made of plastic in the guide region of the carbon brushes (23), and **in that** the bearing bridge (24) carries an integrated switch (15) which is provided with means which open the switch (15) in a positively actuated manner when the switch button (18) is switched off.

2. Powered hand tool according to Claim 1, **characterized in that** the guide region of the carbon brushes (23) is designed as a shaft (25) of quadrilateral cross section.

3. Powered hand tool according to Claim 2, **characterized in that** one of the four sides of the shaft (25) is made of metal, in particular brass sheet.

4. Powered hand tool according to Claim 3, **characterized in that** the side of the shaft (25) is made of brass sheet, towards which side the carbon brush (23) is pressed during normal use of the motor (21).

5. Powered hand tool according to Claim 1, **characterized in that** the flexible lead (230) of the carbon brush (23) can be held in place in recesses (240) of the bearing bridge (24), in particular can be clamped therein with a rubber stopper (32).

6. Powered hand tool according to Claim 5, **characterized in that**, at its free end, the flexible lead (230) carries an, in particular crimped-on, connector (231), which can be releasably latched on the bearing bridge (24).

7. Powered hand tool according to Claim 1, **characterized in that** the bearing bridge (24) carries the rotor bearing (2100) in such a way that it is mounted in a rubber bush (2101).

## Revendications

1. Outil à main motorisé (10), notamment meuleuse d'angle, dans lequel
- un boîtier (12) sert de logement à un moteur électrique (21) et à un engrenage (26), le moteur présentant un rotor (210) monté dans des paliers de rotor (2100) et qui porte à une extrémité un collecteur (2102), pouvant être relié électriquement à une source de tension à travers des balais en charbon (23) montés sur une plaque de balais,
- le boîtier est divisé dans le sens de sa longueur en deux coquilles (120, 121) et les plaques de balais sont une partie d'un pont de paliers (24) qui porte à la fois les paliers de rotor (100) et les balais en charbon (23),
**caractérisé en ce que**
le pont de paliers (24) est en matière plastique dans la zone de guidage des balais de charbon (23) et il porte un contacteur intégré (15) équipé de moyens qui produisent automatiquement son ouverture quand on coupe le bouton (18) du contacteur.

2. Outil à main motorisé selon la revendication 1,
**caractérisé en ce que**
la zone de guidage des balais de charbon (23) est constituée par un puits (25) dont la section est un quadrilatère.

3. Outil à main motorisé selon la revendication 2,
**caractérisé en ce qu'**
un des quatre côtés du puits (25) est en métal, notamment une tôle de laiton.

4. Outil à main motorisé selon la revendication 3,
**caractérisé en ce que**
le côté du puits β (5) est fait d'une tôle de laiton sur laquelle est appliqué le balai de charbon (23) quand le moteur fonctionne de manière conforme.

5. Outil à main motorisé selon la revendication 1,
**caractérisé en ce que**
le cordon (230) du balai de charbon (23) peut être fixé dans des cavités (240) du pont de paliers (24), et notamment pincé au moyen d'un bouchon de caoutchouc (32).

6. Outil à main motorisé selon la revendication 5,
**caractérisé en ce que**
le cordon (230) peut porter à son extrémité libre une fiche (231), notamment une fiche sertie sur lui et qui peut être bloquée de manière séparable dans le pont de paliers (24)

7. Outil à main motorisé selon la revendication 1,
**caractérisé en ce que**
le pont de paliers (24) porte le palier de rotor (2100) enchâssé dans une douille de caoutchouc.
